Europäisches Patentamt

European Patent Office

Office européen des brevets

(19)

(11) Veröffentlichungsnummer: **0 485 966 A2**

## (12) EUROPÄISCHE PATENTANMELDUNG

(21) Anmeldenummer: **91119303.5**

(51) Int. Cl.⁵: **B24D 3/18**

(22) Anmeldetag: **13.11.91**

(30) Priorität: **16.11.90 DE 4036556**

(43) Veröffentlichungstag der Anmeldung:
**20.05.92 Patentblatt 92/21**

(84) Benannte Vertragsstaaten:
**AT BE CH DE FR GB IT LI NL SE**

(71) Anmelder: **Elbel, Karl, Dr.**
**Griesstrasse 35 b**
**W-4019 Monheim 2(DE)**

(72) Erfinder: **Elbel, Karl, Dr.**
**Griesstrasse 35 b**
**W-4019 Monheim 2(DE)**

(74) Vertreter: **Türk, Gille, Hrabal**
**Brucknerstrasse 20**
**W-4000 Düsseldorf 13(DE)**

(54) **Verfahren zur Herstellung von Schleif- und Honkörpern.**

(57) Verfahren zur Herstellung von Schleif- und Honkörpern, bei dem Schleifkorn in ein Bindemittel aus einem Geopolymer eingebettet wird, worauf eine Härtung erfolgt.

EP 0 485 966 A2

Rank Xerox (UK) Business Services
(-/2.18/2.0)

Die Erfindung betrifft ein Verfahren zur Herstellung von Schleif- und Honkörpern durch Einbetten von Schleifkorn in ein Bindemittel und anschließendes Härten.

Das Verfahren kann eingesetzt werden zur Herstellung hart gebundener Schleifkörper in Form von Scheiben, Walzen, Ringen, Segmenten, Honsteinen usw.

Die bekannten hart gebundenen Schleifkörper werden hergestellt unter Verwendung von keramischen Bindemitteln, Phenolharz-, Magnesit-, Epoxidharz- oder Acrylharz-Bindemitteln, sowie seltener eingesetzten Metall-, Silikat-, Polyester- und Schellak-Bindemitteln.

Keramisch gebundene Schleifkörper herkömmlicher Art finden hauptsächlich im Präzisionsschliff Anwendung. Ihre Herstellung ist wegen des notwendigen mehrtägigen Brennens bei Temperaturen zwischen 900° und 1250°C sehr aufwendig und umweltbelastend. Darüberhinaus müssen diese Körper wegen des beim Brennen eintretenden Verzuges mit entsprechendem Übermaß versehen werden, was eine entsprechende Nacharbeit notwendig macht.

Die Phenolharzbindung geht von der gleichzeitigen Verwendung pulverförmiger Phenolnovolake und Flüssigkeiten wie Phenolresolen, Kresol und/oder Furfurol aus. Abgesehen von den notwendigen arbeitshygienischen Maßnahmen bei der Herstellung stellt das bis zu drei Tage dauernde Härten bei gesteuert steigenden Temperaturen bis zu 185°C eine Umweltbelastung auch insoweit dar, als hierbei erhebliche Mengen an freiem Phenol, an Formaldehyd und Ammoniak neben Wasser freigesetzt werden.

Bei beiden vorgenannten Bindungsarten wird das Schleifkorn in einem Mischer vorgelegt und mit einer Flüssigkeit befeuchtet, bei keramischer Bindung beispielsweise mit einer Dextrinlösung. Anschließend werden die pulverförmigen Bindemittel und eventuelle Zusatzstoffe hinzugefügt. Die resultierende rieselfähige Masse wird dann in rotierende Formen gleichmäßig eingefüllt unter Einebnung und nachfolgend unter Druck verpreßt. Der aus der Form ausgestoßene "grüne" Formling wird anschließend, gegebenenfalls nach zwischengeschalteter Trocknung unter 100°C, gebrannt bzw. ausgehärtet, wie vorstehend ausgeführt.

Aufgrund dieser Herstellungsweise ist den beiden beschriebenen Bindungsarten eigen, daß die Struktur der erhaltenen Schleifkörper porös ist, und zwar im Grobkornbereich meist poröser als im Feinkornbereich. Es ist schwierig, bei solchen Schleifkörpern über das gesamte Schleifkorngrößen-Spektrum hinweg die Schleifkorndichte auf die jeweilige Schleifaufgabe einzustellen und besonders im Fein- und Feinstkornbereich ein ausreichendes Spanlückenvolumen bereitzustellen. Darüberhinaus hat die Phenolharzbindung den Nachteil, daß sie wenig beständig ist gegen alkalische Kühlmittel, weshalb diese Bindung hauptsächlich im Trockenschliff eingesetzt wird.

Schleifkörper mit Magnesitbindung sind im Gegensatz zu solchen in keramischer oder Phenolharzbindung gegossen und damit dicht, d.h. praktisch porenfrei. Trotz des Fehlens jeglichen Spanlückenvolumens bieten sie gerade bei gehärteten Stählen bei hohen Abtragsleistungen einen extrem kühlen Schliff. Deshalb werden solche Schleifkörper vornehmlich beispielsweise eingesetzt zum Schleifen von Messern, Scheren, Zangen, Skalpellen und anderen Werkzeugen sowie den Enden von Spiralfedern.

Die Nachteile der Schleifkörper in Magnesitbindung sind mannigfach. So sind sie nur für Arbeitsumfangsgeschwindigkeiten bis zu 20 m/s geeignet, ferner ändern sie ihre Härte mit der Zeit, so daß sie nur in einem Zeitraum von einem Monat bis zu vier Monaten nach der Herstellung optimal eingesetzt werden können. Ein bedeutender Nachteil ist das beim Schleifen freiwerdende Magnesiumchlorid, welches zu starker Korrosion der Maschinen, insbesondere der Schutzhauben, führt und zudem eine Abwasserbelastung darstellt.

Wegen dieser Nachteile der Magnesitbindung führte sich in der Schneidwarenindustrie in den letzten Jahren zunehmend die Epoxidharzbindung ein, trotz des gegenüber der Magnesitbindung erheblich höheren Preises. Ein Handikap der Epoxidharzbindung ist die relativ hohe Viskosität der Basisharze. Sie müssen mit reaktiven Verdünnern auf Viskositäten von 500 bis 1000 mPa.s gebracht werden, um ausreichend gießfähige Mischungen zu ergeben. Durch diese Verdünner sinkt jedoch die Temperaturbeständigkeit der Härtungsprodukte erheblich. Darum stellen solche Bindungen immer einen Kompromiß dar zwischen eben noch ausreichender Gießfähigkeit, Harzanteil, Wärmebeständigkeit und Leistung. In arbeitshygienischer Hinsicht sind die organischen Amine, Epichlorhydrinreste und reaktiven Verdünner zu berücksichtigen.

In jüngster Zeit hat sich in verschiedenen Einsatzgebieten die Acrylharzbindung gemäß EP-Patentschrift 0 114 280 eingeführt. Bei allen, auch in Universitätsgutachten bestätigten guten Eigenschaften solcher Schleifkörper haben auch diese Eigenschaften, die ihren Einsatz beschränken. So können solche Schleifkörper nicht im Trockenschliff eingesetzt werden, sofern längere Kontaktzeiten mit dem Werkstück unvermeidlich sind. Ferner sind die Bindungen empfindlich gegenüber manchen Zusatzstoffen in Hochleistungs-Kühlschmierstoffen, so z.B. gegenüber Polyglykolen und Aminoethanolderivaten. Durch solche Stoffe in Kühlschmiermitteln wird die Acrylbindung in der Schleifzone angequollen mit dem Ergebnis, daß die Scheibe sich mit Metallabrieb zusetzt. Ferner entsteht bei Überbeanspruchung der Bindung in manchen Fällen eine Temperaturerhöhung in der schleifenden Fläche, die partiell zu Depolymerisation führt. Der ansich nicht unangenehme aber nicht toxische Geruch wird von manchen Schleifern abgelehnt.

Aufgabe der Erfindung ist die Bereitstellung von Schleif- und Honkörpern, die auf breiter Basis einsetzbar, beständig gegen Kühl- und Schmierstoffe sowie gegen Temperaturerhöhungen sind und eine verbesserte Schleifleistung ergeben.

Diese Aufgabe wird durch ein Verfahren zur Herstellung von Schleif- und Honkörpern gelöst, bei dem Schleifkorn in ein Bindemittel eingebettet wird, worauf eine Härtung erfolgt. Das Verfahren ist dadurch gekennzeichnet, daß als Bindemittel ein Geopolymer verwendet wird.

Bei den erfindungsgemäß als Bindemittel verwendeten Geopolymeren handelt es sich um ein keramisches Bindemittel, das sich wie organische hitzehärtbare Harze verwenden läßt. Derartige Geopolymere werden beispielsweise in der Zeitschrift "techno-tip", Nr. 4, April 1987, Seiten 132 und 133 vorgestellt. Es handelt sich bevorzugt um Geopolymere vom Typ Silico-Aluminat, Poly(Sialat) und/oder Poly(Sialat-Siloxo) von Natrium und Kalium. Solche Bindemittel, wie sie erfindungsgemäß eingesetzt werden, werden auch als "Mineralpolymere" bezeichnet; letztere werden beispielsweise in der US-Patentschrift 4,472,199 beschrieben und können nach den dort angegebenen Verfahren hergestellt werden.

Im Prinzip handelt es sich bei den erfindungsgemäß als Bindemittel eingesetzten Geopolymeren vor der Härtung um Mischungen besonders reaktionsfähiger wasserunlöslicher Oxide auf der Basis von Siliciumdioxid in Verbindung mit Aluminiumoxid, die in wäßrig alkalischem Medium bei Temperaturen ab etwa 85°C in wirtschaftlich vertretbarer Zeit härtbar sind. Derartige Produkte sind im Handel erhältlich. Im Rahmen der Erfindung hat es sich gezeigt, daß bei Härtungstemperaturen von etwa 85°C und darüber eine Schleifkörperbindung erzielt wird, die eine gute mechanische Festigkeit aufweist. Es ist jedoch erfindungsgemäß auch möglich eine Härtung bei Zimmertemperatur durch beschleunigende Zusätze oder durch Verlängerung der Härtungszeit vorzunehmen.

Beim erfindungsgemäßen Verfahren können die Geopolymeren so gewählt werden, daß für die jeweiligen Schleifverfahren geeignete Härten entstehen. So ist es beispielsweise möglich Mohs-Härten von 3 zu erzielen, die z. B. geeignet sind für das Schleifen gehärteter Stähle mit z. B. Korund als Schleifmittel. Beim Einsatz von Borazon oder Diamant als Schleifmittel wird die Härte der Geopolymerbindung zweckmäßigerweise auf Härten von etwa 8 nach Mohs eingestellt. Für spezielle Einsatzzwecke ist es möglich und zweckmäßig die Geopolymerbindung mit Hilfe z. B. anorganischer Peroxide mehr oder weniger stark zu schäumen, um so ein ausreichendes Spanlückenvolumen zu schaffen und die Mitnahme des Kühlschmiermittels zu verbessern.

Im Rahmen der Erfindung hat es sich beispielsweise gezeigt, daß eine Verbesserung der Schleifleistung durch Verringerung der Härte erzielt werden kann bei Mitverwendung weicherer anorganischer Materialien, wie beispielsweise Calcite in gewünschter Mahlfeinheit, bei der Herstellung der erfindungsgemäßen Schleifkörper.

Im Rahmen der Erfindung hat es sich gezeigt, daß eine besonders gute Schleifleistung erzielt werden kann, wenn zusammen mit dem Schleifkorn in das Bindemittel auch organische Verbindungen in pulverartiger Form eingearbeitet werden. Solche organischen Stoffe weisen bevorzugt einen Schmelz- bzw. Erweichungspunkt bzw. Erweichungsbereich oberhalb 150°C auf, da sie sonst beim Schleifprozeß erweichen und dazu führen, daß sich der Schleifkörper mit Schleifabrieb zusetzt.

Es ist günstig, wenn die organischen Stoffe in unterschiedlichen Korngrößen erhältlich sind, um in der Schleifscheibenrezeptur die Komponenten auf die jeweilige Schleifkorngröße einstellen zu können. Die organischen Zusatzstoffe sollten ungiftig und umweltfreundlich sein. Sie sollten die Zusammensetzung und Eigenschaften von Kühlmitteln nicht verändern und durch diese nicht angequollen werden. Sie können auch einen günstigen Einfluß auf das Schleifergebnis ausüben, beispielsweise dadurch, daß sie in der Schleifzone einen gewissen Gleiteffekt bewirken.

Besonders bewährt haben sich für die bevorzugte Ausführungsform der Erfindung Polymere, beispielsweise feine Granulate und Mehle, beispielsweise auf der Basis von Polyethylen, Polypropylen und/oder Polyamiden. Selbstverständlich sind auch andere Polymere oder definierte organische Verbindungen geeignet, soweit sie den vorstehenden Bedingungen entsprechen. Hierbei kann es sich um gezielt hergestellte Produkte handeln, aber auch um granulat- oder mehlartige Abfallprodukte der spangebenden Kunststoffbearbeitung. Die zugesetzte Menge der organischen Granulate oder Mehle wird nach den gewünschten Charakteristika des erhaltenen Endproduktes gewählt; sie unterliegt keiner Begrenzung. Die zugesetzte Menge kann beispielsweise so gewählt werden, daß sie 5 bis 20 Vol% des fertiggestellten Schleif- oder Honkörpers beträgt.

Als Schleifkorn kommen alle bekannten Arten in Frage, wie beispielsweise Glas, Bimsstein, Quarze (z.B. Flint), Granat, Korunde, Carbide, wie Siliciumcarbid Borcarbid, Oxide wie Zirkonoxid, Nitride, wie Bornitrid, und Diamant, wobei derartige Materialien allein oder im Gemisch vorliegen können. Es sind alle üblichen Körnungsgrößen möglich, nach der Norm FEPA beispielsweise 8 - 1200. Das Schleifkorn wird in üblichen Mengen in die herzustellenden Schleif- und Honkörper eingearbeitet; beispielsweise in der Größenordnung von 30 bis 70 Vol% des fertiggestellten Materials.

Die erfindungsgemäß herstellbaren Schleifkörper lassen sich auch durch den Einbau von Glasoder anderen Verstärkungsfasern in Form von Geweben und/oder Kurzfasern und/oder Gewebeschnitzeln verstärken und so hinsichtlich ihrer möglichen Arbeitsumfangsgeschwindigkeit den gegebenen Anforderungen anpassen. Ferner ist der Einbau von Metallringen oder anderen Verstärkungen möglich. Solche Verstärkungen sind bei der Herstellung phenolharzgebundener Schleifkörper üblich, bei keramisch gebundenen wegen der hohen Brenntemperaturen jedoch nicht.

Die erfindungsgemäß herstellbaren neuartigen Schleifkörper mit geopolymerer Bindung lassen sich, wie auch aus den weiter vorne zitierten Veröffentlichungen hervorgeht, geschäumt herstellen.

Neben der Möglichkeit des Schäumens der Bindung mittels beispielsweise anorganischer Peroxide, wie vorstehend erwähnt, kann eine reproduzierbare Porosität auch durch Mitverwendung von Microhohlkugeln auf beispielsweise Glasbasis, wie sie in unterschiedlichen Sieblinien erhältlich sind, erzielt werden.

Beim erfindungsgemäßen Verfahren werden Gemische von Schleifkorn, sowie möglichen Zusätzen, wie beispielsweise organischen Mehlen oder Granulaten sowie beispielsweise Microhohlkugeln mit dem Bindemittel, dem alkalischen Härtungsmittel und Wasser (Anmachwasser) hergestellt. Je nach Menge des in die Masse eingebrachten Anmachwassers ist die Mischung unterschiedlich verarbeitbar. Eine Masse mit höherem Wasseranteil läßt sich wie Beton gießen, gegebenenfalls unter Verflüssigung durch zusätzliche Vibration, wie z.B. in dem EP-Patent 0 114 280 beschrieben. Etwas trockener eingestellte Mischungen lassen sich auch walzen, beispielsweise zur Herstellung von Platten zur anschließenden Herstellung von Honsteinen. Solche trockeneren Mischungen sind auch geeignet zur Herstellung von Schleifkörpern, die von einfacheren geometrischen Formen abweichen, durch Formpressen. Auch ist die Herstellung rieselfähiger Massen möglich zwecks Nutzung der bisher üblichen Technologie, wie z. B. Formpressen. Die in die entsprechende Form gegossene, gewalzte oder gepreßte Schleifscheibenmasse kann z.B.

mit einer Folie zur Vermeidung von Wasserverlust abgedeckt und bei 85ºC oder darüber ausgehärtet werden. Je nach Dicke des Schleifkörpers kann diese nach 1 bis 2 Stunden entformt werden und ist nun formstabil. Es schließt sich nun ein Trocknungsvorgang an zur Entfernung des als Reaktionsmedium dienenden Wassers. Diese Trocknung kann z.B. bei Temperaturen um ca. 90ºC vorgenommen werden und dauert, je nach Dicke des Körpers, 1 bis zu 8 Stunden.

Das Extrudieren ist als Formgebungsverfahren für die neuartigen erfindungsgemäß herstellbaren Schleifkörper einsetzbar zur Herstellung von z.B. Kleinschleifkörpern, Schleifkörpern für das Gleitschleifverfahren, Optikpellets u.a. Hierbei wird die Masse in einen Folienschlauch entsprechendem Durchmessers extrudiert und nachfolgend derart ausgehärtet, daß eine Verformung des Folienschlauches nicht eintreten kann.

Aushärtung und Trocknung können, insbesondere bei Schleifkörpern größerer Dicke, durch Anlegen eines Hochfrequenzfeldes oder durch Mikrowellen beschleunigt werden. Es sind jedoch auch andere Verfahren möglich, um die Wärme schneller in das Innere der Masse zu bringen.

Für Schleifkörper, welche im Einsatz hohen thermischen und mechanischen Belastungen ausgesetzt sind, erfolgt bevorzugt nach dem Trocknen eine Weiterhärtung bei Temperaturen bis zu 350ºC. Eventuelle Glasfaser-Einlagen leiden bei dieser Temperatur nicht. Die eingelagerten organischen Schleifhilfsstoffe mögen zwar schmelzen, erstarren jedoch wieder bei der Abkühlung. Es muß nur Sorge getragen werden, daß solche organischen Stoffe als Hilfsstoffe verwendet werden, die bei diesen erhöhten Temperaturen nicht gasen oder depolymerisieren.

**Beispiel**

550 g eines handelsüblichen Härters auf der Basis von KOH werden vorgelegt und mit 550 g Wasser (Anmachwasser) versetzt. Anschließend werden 1300 g Geopolymer (handelsüblich, Feststoff) als Bindemittel eingemischt, worauf 5000 g Korund mit einer Korngröße nach FEPA von 46 eingemischt werden. Unter weiterem Mischen werden 700 g hartes Polypropylen-Mehl mit einer Siebung von etwa 50 bis 300 μm zugesetzt.

Die entstandene Mischung ist - unter Vibration - noch gießfähig und wird entsprechend in eine Form gegeben. Die Mischgeräte werden sofort gereinigt. Nach Aushärtung (zwei Stunden bei 85ºC), wobei die Masse nach oben mit einer Polyethylen-Folie abgedeckt wird, kann entformt werden. Der so erhaltene Schleifkörper besteht zu 31,4 Vol% aus KOH + Wasser, 12,2 Vol% aus Geopolymer, 36,5 Vol% Korund und 19,9 Vol% Polypropylen-Pulver. Da beim Trocknen bei 85ºC über 5 Stunden ca. 16 Vol% Wasser freiwerden, erhöhen sich die endgültigen Volumenanteile der verbleibenden Komponenten entsprechend, so daß z.B. der Schleifkornanteil auf über 40 Vol% steigt.

**Patentansprüche**

1. Verfahren zur Herstellung von Schleif- und Honkörpern durch Einbetten von Schleifkorn in ein Bindemittel und anschließendes Härten, **dadurch gekennzeichnet**, daß als Bindemittel ein Geopolymer erwendet wird.

2. Verfahren nach Anspruch 1, dadurch gekennzeichnet, daß die Härtung durch Erwärmen in alkalisch-wäßrigem Medium, beispielsweise auf Temperaturen ab 85ºC, erfolgt.

3. Verfahren nach Anspruch 1oder 2, dadurch gekennzeichnet, daß ein Geopolymer vom Typ Silico-Aluminat, Poly-Sialat und/oder Poly-Sialat-Siloxo von Natrium und Kalium verwendet wird.

4. Verfahren nach Anspruch 1, 2 oder 3, dadurch gekennzeichnet, daß die Schleif- und Honkörper vor dem Härten durch Gießen, Walzen, Formpressen oder Extrudieren geformt werden.

5. Verfahren nach einem der vorhergehenden Ansprüche, dadurch gekennzeichnet, daß in das Bindemittel zusätzlich organische Granulate oder Mehle, die bei Temperaturen von 150ºC und darüber erweichen, eingearbeitet werden.

6. Verfahren nach einem der vorhergehenden Ansprüche, dadurch gekennzeichnet, daß in das Bindemittel zusätzlich Mikro-Glashohlkugeln eingearbeitet werden.

7. Verfahren nach einem der vorhergehenden Ansprüche, dadurch gekennzeichnet, daß die Schleifkörper durch Faserstoffe oder Metallringe verstärkt werden.

8. Verwendung von Geopolymeren als Bindemittel zur Herstellung von Schleif- und Honkörpern.